# EUROPEAN PATENT APPLICATION

(11) **EP 4 651 011 A1**
(43) Date of publication of application: **19.11.2025**
(21) Application number: 24212278.6
(22) Date of filing: 12.11.2024
(51) Int. Cl.: G06F 30/30, G06F 111/10, G06F 111/12

(54) **3D SCHEMATIC VISUALIZATION**

(30) Priority: 16.05.2024 US 202418666307
(71) Applicant: GlobalFoundries U.S. Inc., Malta, NY 12020 (US)
(72) Inventor: Feuillette, Romain, Essex Junction, 05452 (US); Orner, Bradley, Santa Clara, 95054 (US); Burgess, Stephen T., Malta, 12020 (US)
(74) Representative: Grünecker Patent- und Rechtsanwälte PartG mbB

(57) **Abstract**

A design is schematically displayed using a three-dimensional (3D) graphical user interface (GUI) by displaying, via the 3D GUI, a first plane extending along a first axis and a second axis different from the first axis, including displaying symbols corresponding to a set of first-level components of a first level of the design disposed on the first plane; and a second plane extending along the first axis and second axis, including displaying symbols corresponding to a first set of second-level components of a second level of the design disposed on the second plane. The two planes are displayed simultaneously, and respectively disposed at first and second positions along a third axis different from the first and second axes. Each level of the design may correspond to a respective level of a hierarchy of the design, a respective substrate the design will be implemented on, or a combination thereof.

## Description

### FIELD OF THE DISCLOSURE

The present disclosure relates to electronic design automation, and in particular to a graphical user interface (GUI) for displaying and interacting with an electronic design having a plurality of levels, such as hierarchy levels in a design hierarchy or levels corresponding to a plurality of stacked substrates.

### BACKGROUND

Electronic Design Automation (EDA) systems may present a design (such as a design of an electronic device or circuit) as a schematic in graphical form to a user (such as a chip designer) in order to improve the ease with which the user may comprehend and, if desired, analyze and/or alter the design.

One strategy for improving the comprehensibility and editability of a design is to organize the design as a hierarchy of components. This also can make it easier to reuse components, both within a design and across multiple designs. The components in the hierarchy may be organized in levels, wherein a component at each level of the hierarchy may comprise one or more subcomponents respectively corresponding to components at a lower level of the hierarchy.

In EDA systems of the related arts, some or all of components (or blocks) of a level of the hierarchy may be displayed in a window, along with interconnections between those components (or blocks). In order to see details of one or more components at a different level of the hierarchy, the user must open an additional window. As a result, a user may end up opening numerous windows each respectively displaying a schematic for one or more components of one or more respective levels, with no clear indication of how those components are related or are connected to each other.

A design with a somewhat deep hierarchal structure and/or also with many smallish components can be somewhat difficult and more time consuming to understand and analyze because of this sort of highly fragmented representation. It can also be more difficult to identify specific sections of interest. Such a structure can also be annoying to navigate. The designer likely finds themself having to sequentially open up many windows which they may need to cycle back-and-forth between, which consumes additional time and may lead to confusion and errors. This may be especially true when the user is dealing with a design for which they were not an original designer, since such a user typically lacks prior knowledge of the structure of the design.

Accordingly, a need exists for an interface and corresponding methods that overcomes these impediments by providing enhanced and immediate visualization for a more comprehensive view of the overall hierarchal structure and a convenient means to navigate and access arbitrary subsections. Furthermore, a need exists in such interfaces and methods to flatten out arbitrary portions of interest from the design in situations where flattening makes those portions even easier to comprehend, analyze, and/or manipulate.

### SUMMARY

Embodiments of the present disclosure relate to Electronic Design Automation (EDA) tools through which a user may inspect and optionally interact with a design. In particular, embodiments relate to facilitating the comprehension of the design using a three-dimensional 3D representation of the design, wherein one axis of the 3D representation corresponds to levels in the design, and wherein the levels may be conceptual (such as in a hierarchical design) or physical (such as in a stacked wafer design).

In an embodiment, a method for schematically displaying a design using a three-dimensional (3D) graphical user interface (GUI) of a computer system comprises displaying, via the 3D GUI, the design by displaying a first plane extending along a first axis and a second axis different from the first axis, and displaying a second plane extending along the first axis and second axis. The first plane and the second plane are displayed simultaneously, and respectively disposed at a first position and a second position different from the first position along a third axis different from the first axis and the second axis. Displaying the first plane includes displaying a set of first-level components of a first level of the design disposed on the first plane, displaying the second plane includes displaying a first set of second-level components of a second level of the design disposed on the second plane, and each of the set of first-level components and each of the first set of second-level components are displayed using a respective electronic schematic symbol.

In an embodiment, a system for schematically displaying a design using a three-dimensional (3D) graphical user interface (GUI) comprises a processor and is configured to perform steps comprising displaying, via the 3D GUI, the design by displaying a first plane extending along a first axis and a second axis different from the first axis, and displaying a second plane extending along the first axis and second axis. The first plane and the second plane are displayed simultaneously, and respectively disposed at a first position and a second position different from the first position along a third axis different from the first axis and the second axis. Displaying the first plane includes displaying a set of first-level components of a first level of the design disposed on the first plane, displaying the second plane includes displaying a first set of second-level components of a second level of the design disposed on the second plane, and each of the set of first-level components and each of the first set of second-level components are displayed using a respective electronic schematic symbol.

In an embodiment, a non-transitive computer-readable media comprises computer programming instructions that when executed by one or more processors of a system including a three-dimensional (3D) graphical user interface (GUI) cause the system to schematically display a design by performing steps comprising displaying, via the 3D GUI, the design by displaying a first plane extending along a first axis and a second axis different from the first axis, and displaying a second plane extending along the first axis and second axis. The first plane and the second plane are displayed simultaneously, and respectively disposed at a first position and a second position different from the first position along a third axis different from the first axis and the second axis. Displaying the first plane includes displaying a set of first-level components of a first level of the design disposed on the first plane, displaying the second plane includes displaying a first set of second-level components of a second level of the design disposed on the second plane, and each of the set of first-level components and each of the first set of second-level components are displayed using a respective electronic schematic symbol.

In embodiments, the design is a hierarchical design, and a first second-level component of the first set of second-level components is a subcomponent of a first first-level component of the set of first-level components.

In embodiments, the set of first-level components corresponds to components to be implemented on a first substrate, and the first set of second-level components corresponds to components to be implemented on a second substrate stacked with the first substrate.

In embodiments, the method or steps further comprise receiving, via the 3D GUI, a user input corresponding to a change in the design, and causing the design to be altered in response to the user input.

### BRIEF DESCRIPTION OF THE DRAWINGS

The accompanying drawings, which are incorporated in and constitute a part of this specification, illustrate various embodiments of the invention and, together with a general description of the invention given above and the detailed description of the embodiments given below, serve to explain the embodiments of the invention. In the drawings, like reference numerals refer to like features in the various views.
FIG. 1 illustrates a system for design automation according to an embodiment.
FIG. 2 illustrates a design such as may be displayed by an embodiment.
FIG. 3 illustrates the design of FIG. 2 as displayed according to an embodiment.
FIG. 4 illustrates a design such as may be displayed by an embodiment.
FIG. 5 illustrates the design of FIG. 4 displayed according to an embodiment.
FIG. 6 illustrates the design of FIG. 4 displayed according to an embodiment.
FIG. 7 illustrates the design of FIG. 4 displayed according to an embodiment.
FIG. 8 illustrates the design of FIG. 4 displayed according to an embodiment.
FIG. 9 illustrates the design of FIG. 4 displayed according to embodiment.
FIG. 10 illustrates the design of FIG. 4 displayed according to embodiment.
FIG. 11 illustrates a partially flattened display of the design of FIG. 4 such a may be produced by an embodiment.
FIG. 12 illustrates a multi-substrate design as displayed according to embodiment.
FIG. 13 illustrates a multi-substrate design as displayed according to embodiment, wherein one substrate comprises a hierarchical design.
FIG. 14 illustrates a process for providing a user interface for hierarchical and/or stacked designs according to an embodiment.
FIG. 15 illustrates a system for providing an embodiment.

### DETAILED DESCRIPTION

Illustrative embodiments of the present disclosure will be described below in more detail with reference to the accompanying drawings. The inventive features may, however, be embodied in different forms and should not be construed as limited to the embodiments set forth herein. Rather, these embodiments are provided so that this disclosure will be thorough and complete, and will fully convey the scope of the present claims to those skilled in the art. Throughout the disclosure, like reference numerals refer to like parts throughout the various figures and embodiments.

It will be understood that, although the terms "first" and/or "second" may be used herein to describe various elements, these elements should not be limited by these terms. These terms are only used to distinguish one element from another element. For instance, a first element discussed below could be termed a second element without departing from the teachings of the present disclosure. Similarly, the second element could also be termed the first element. Furthermore, in the following, a "set" of items refers to one or more of the items, and a "plurality" of items refers to two or more of the items.

The drawings are not necessarily to scale and in some instances, proportions may have been exaggerated in order to clearly illustrate features of the embodiments.

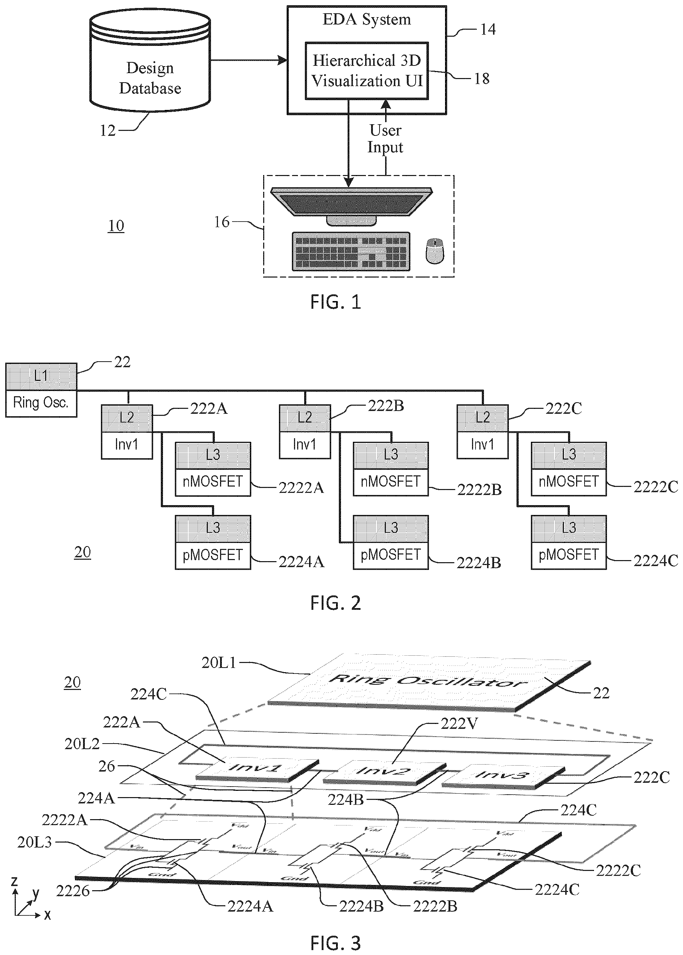

FIG. 1 illustrates a system 10 for electronic design according to an embodiment. The system 10 comprises a design database 12, and EDA system 14, a hierarchical 3D visualization graphical user interface (GUI) subsystem 18 (hereinafter referred to as GUI subsystem 18), and a human interaction device (HID) 16.

The GUI subsystem 18 comprises an embodiment of the present disclosure. The GUI subsystem 18 presents a design stored in the design database 12 to a user via the HID 16, and may permit the user to inspect, evaluate, and modify the design via the facilities provided by the EDA system 14. Although the GUI subsystem 18 is illustrated as being a component of the EDA system 14, embodiments are not limited thereto, and in embodiments the GUI subsystem 18 may instead be a separate front-end configured to operate with an EDA system.

The HID 16 may be any of a variety of user interface devices capable of presenting images to a user and of receiving inputs from the user. For example, the HID 16 may include on or more selected from a group comprising a monitor, a touch-screen display, a mouse, a keyboard, a trackpad, a digitizer tablet, a trackball, a keypad, a speaker, a microphone, a gesture recognition subsystem, and the like, but embodiments are not limited thereto.

In some embodiments, the GUI subsystem 18 may use the HID 16 to present one or more 2D projections of a 3D image corresponding to a design. The 2D projections may be isometric projections, cabinet projections, perspective projections, or the like.

In other embodiments, the HID 16 may include a virtual reality (VR) or augmented reality (AR) device capable of presenting stereoscopic 3D images, and the GUI subsystem 18 may use the HID 16 to provide stereoscopic 3D images corresponding to the design to the user.

In other embodiments, the HID 16 may include a computer-generated holography device, a volumetric display device, or some other kind of 3D display.

Input from the user through the HID 16 may include commands to zoom, rotate, or translate the 3D images, to alter which parts of the design are displayed and how, to execute functions of the EDA system 14 (such as functions that perform analysis or alteration) on all or selected part(s) of the design, and the like.

FIG. 2 illustrates a hierarchical design 20 such as may be processed using an embodiment. The design 20 is a relatively simple one, and may be a portion of a much larger and more complicated design. The hierarchy of the design 20 includes a first (top) level (L1) and second and third levels L2 and L3.

The first level L1 comprises a first-level component: ring oscillator 22. The second level L2 of the hierarchy includes three second-level components that are subcomponents of the ring oscillator 22: first, second, and third inverters 222A, 222B, and 222C.

The third level L3 of the hierarchy includes six third-level components corresponding to two subcomponents of each of the first, second, and third inverters 222A, 222B, and 222C: a first nMOSFET 2222A and a first pMOSFET 2224A of the first inverter 222A, a second nMOSFET 2222B and a second pMOSFET 2224B of the second inverter 222B, and a third nMOSFET 2222C and a third pMOSFET 2224C of the third inverter 222C.

FIG. 3 illustrates a display of the design 20 of FIG. 2 according to an embodiment. In the example of FIG. 3, all hierarchical levels of the design 20 are displayed simultaneously.

The design 20 is displayed schematically; that is, without reliance on the physical aspects of an implementation of the design and without necessarily indicating the absolute or relative sizes of the elements of the designs or the absolute or relative positions of the elements. Furthermore, the components and blocks of the design 20 are displayed using electronic schematic symbols, including pictographic symbols for electronic devices such as transistors, resistors, and capacitors; geometric shapes corresponding to subcircuits, and pictographic wiring symbols corresponding to interconnects, junctions, and terminals. This is in contrast to, for example, a layout display that directly corresponds to the physical implementation of the design. Each of the first, second, and third levels L1, L2, and L3 of the design 20 of FIG. 2 is displayed on first, second, and third planes 20L1, 20L2, and 20L3. The first, second, and third planes 20L1, 20L2, and 20L3 each extend along the x and y axes and are disposed in order of their level on the Z axis.

FIG. 3 and subsequent figures showing display of a design will be described according to the apparent disposition of the elements in three dimensions, regardless of whether an embodiment displays the elements using a 2D projection, a pair of stereoscopic images, a computer-generated hologram, a volumetric display device, or some other technology.

In the example of FIG. 2, a distance in Z direction corresponds to a level of hierarchy of the schematic; however, embodiments are not limited thereto. In other embodiments, the level of hierarchy may correspond to a distance on the X direction, a distance on the Y direction, or a distance along some other direction, and the planes used to display each level may extend along two axes orthogonal to the axis corresponding to the level of the hierarchy.

For the first level L1 of the displayed design 20, the embodiment schematically displays the ring oscillator 22 on the first plane 20L1 without details of its interior structure.

For the second level L2 of the displayed design 20, the embodiment schematically displays the first, second, and third inverters 222A, 222B, and 222C that comprise ring oscillator 22 along with first, second, and third interconnects 224A, 224B, and 224C between them on the second plane 20L2.

For a third level L3 of the displayed design 20, the embodiment schematically displays the first, second, and third nMOSFET 2222A, 2222B, and 2222C and the first, second, and third pMOSFET 2224A, 2224B, and 2224C that respectively comprise the first, second, and third inverters 222A, 222B, and 222C, along with the with first, second, and third interconnects 224A, 224B, and 224C between the inverters and internal interconnects 2226 within the inverters, on the third plane 20L3.

Although FIG. 3 shows the interconnects shown on the second plane 20L2 also being displayed on the third plane 20L3, embodiments are not limited thereto, and in embodiments, none or only some of the interconnects shown at a level may be displayed at the next lower level.

FIG. 3 also shows dashed lines 26 indicating where in third level 20L3 the components that are subcomponents of the first inverter 222A shown on second level 20L2 are displayed. In embodiments, such dashed lines may be provided for some, all, or none of the displayed components.

For example, in embodiments, such dashed lines may only be displayed for components that the user has indicated an interest in, such as, for example, by selecting the component(s), by positioning a cursor over the component, looking at the component as determined by an eye-tracking device, or by positioning the component in the center of the display, or by other means known in the related art.

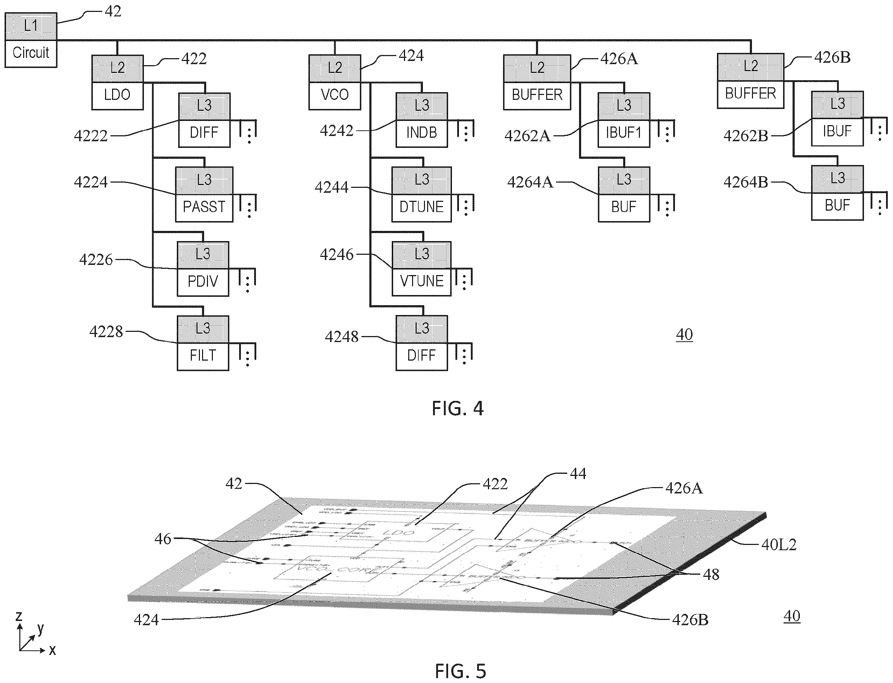

FIG. 4 illustrates a hierarchical design 40 such as may be displayed by an embodiment. The design 40 is more complicated than the design 20 of FIG. 2, and includes a first (top) level (L1), second and third levels L2 and L3, and additional levels that have been omitted in the interest of brevity.

The first level L1 of the hierarchy comprises a circuit 42. The second level L2 of the hierarchy comprises elements that are subcomponents of the circuit 42: a low-dropout regulator (LDO) 422, a voltage-controlled-oscillator (VCO) 424, and first and second buffers 426A and 426B.

The third level L3 of the hierarchy includes elements that are components of the components of the second level L2: a differential amplifier (DIFF) 4222, a pass transistor (PASST) 4224, a programmable voltage divider (PDIV) 4226, and a low-pass filter (FILT) 4228 that comprise the LDO 422; an inductor bridge (INDB) 4242, a digitally-controlled tuning circuit (DTUNE) 4244, a voltage-controlled tuning circuit (VTUNE) 4246, and a differential circuit (DIFF) 4248 that comprise the VCO 424; a first inverting buffer (IBUF) 4262A and a first non-inverting buffer (BUF) 4264A that comprise the first buffer 426A, and a second IBUF 4262B and a second BUF 4264B that comprise the second buffer 426B.

One or more components of each of the components in the third level L3 of the hierarchy may be disposed in a fourth or lower level of the hierarchy of the design 40, but these are not shown in FIG. 4 in the interest of brevity.

FIGS. 5-11 illustrate display of the design 40 according to embodiments. FIGS. 5-11 may correspond to more than one embodiment, but a single embodiment may be capable of displaying the design 40 as shown in all of FIGS. 5-11 according to selections made by a user and configuration options specified for the embodiment.

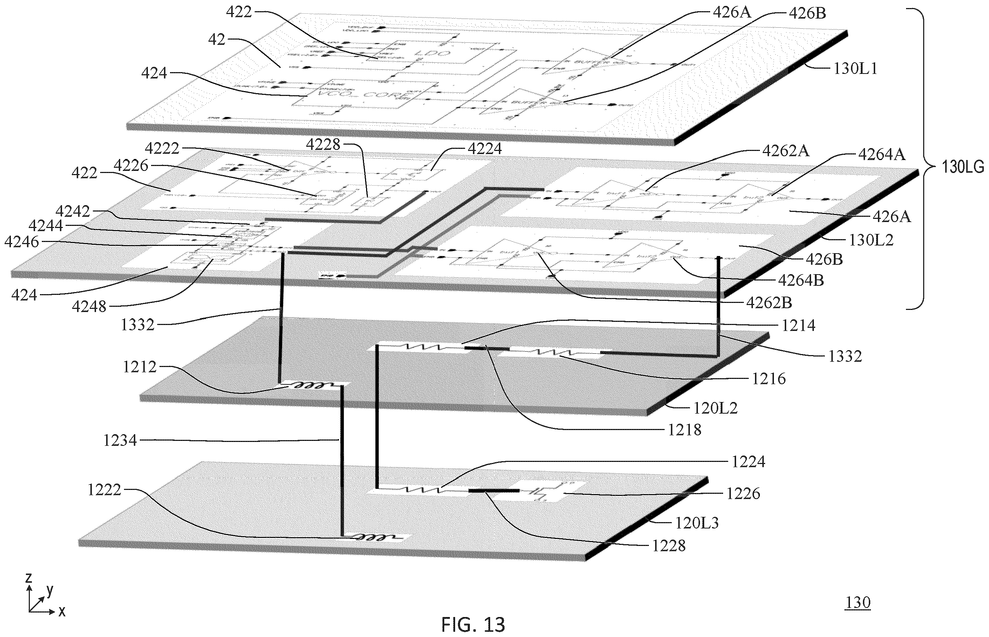

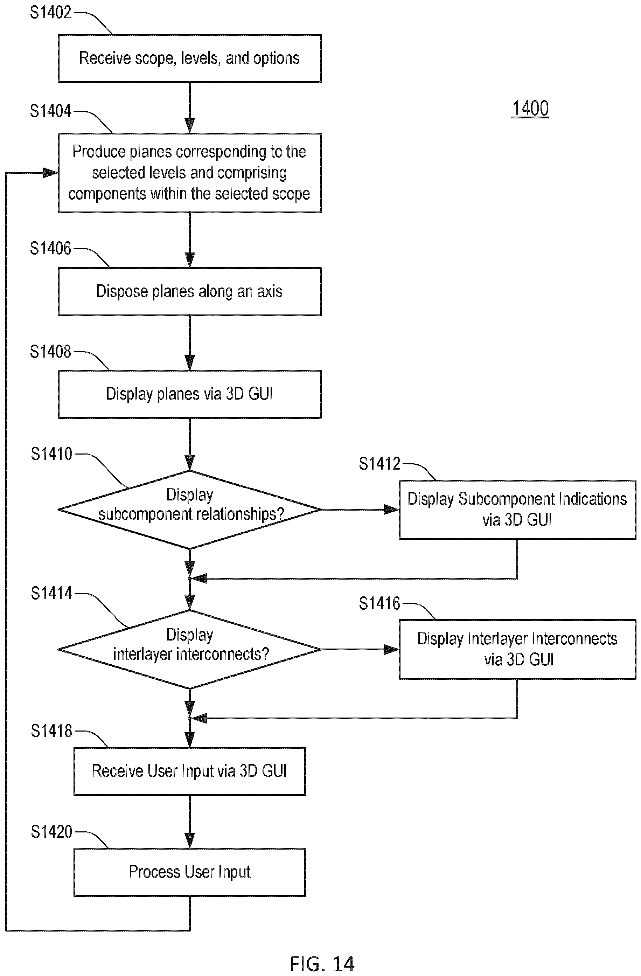

In any or all of embodiments that may produce the displays of FIGS. 5-11, as well as embodiments that produce the displays of a multi-substrate design such as shown in FIGS. 13 and 14, the embodiment may allow a user to select and edit any displayed feature without limitation by what level the feature is in. Selection of the component to edit may be done by any of a variety of means known in the related art, such as, for example, clicking on the component or selecting the component from a list.

Embodiments may then automatically update the display of level containing the edited component, a level above the edited component, a level below the edited component, or a combination thereof to reflect the result of the editing.

FIG. 5 illustrates a display of the hierarchical design 40 according to an embodiment. In FIG. 5, only a second plane 40L2 corresponding to a second level L2 of the design 40 is displayed.

The embodiment's display of the second plane 40L2 includes the LDO 422, VCO 424, and first and second buffers 426A and 426B that comprise the components of the circuit 42, collectively referred to as second-level components below. In addition, the embodiment displays interconnects 44 between the second-level components, input interconnects 46 providing input signals to the circuit 42, and output interconnects 48 by which the circuit 42 provides output signals.

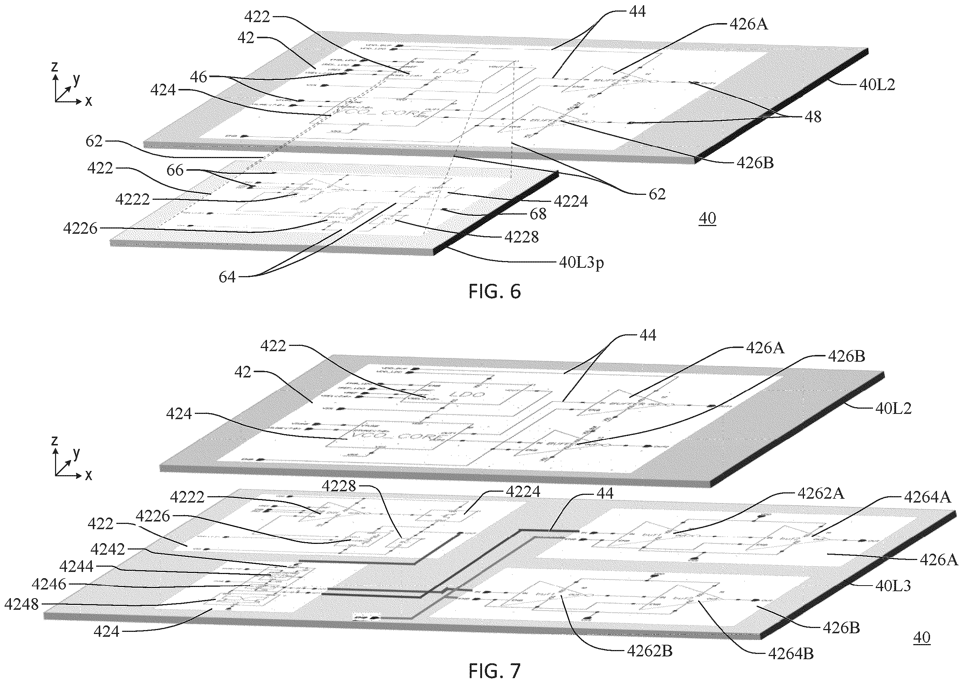

FIG. 6 illustrates another display of the hierarchical design 40 according to an embodiment. In FIG. 6, the second plane 40L2 is displayed and a portion of the third level L3 of the design 40 are displayed on third level portion plane 40L3p. The second plane 40L2 as described for FIG. 5.

The third level portion plane 40L3p corresponds to the LDO 422, and in FIG. 6 dashed lines 62 indicates the correspondence. Accordingly, the third level portion plane 40L3p displays the DIFF 4222, the PASST 4224, the PDIV 4226, and the FILT 4228 that comprise the LDO 422.

In an embodiment, the display shown in FIG. 6 may be generated in response to a user selecting the LDO 422 for more detailed display while viewing the design 40 as displayed in FIG. 5.

The third level portion plane 40L3p also displays interconnects 64 between the components of the LDO 422, interconnects 66 that provide inputs to the LDO 422, and an interconnect 68 the provides an output from the LDO 422.

FIG. 7 illustrates another display of the hierarchical design 40 according to an embodiment. In FIG. 7, the second plane 40L2 and a third plane 40L3 corresponding to the third level L3 of the design 40 are displayed. The second plane 40L2 is displayed as described for FIG. 5.

In an embodiment, the display shown in FIG. 7 may be generated in response to a user selecting the circuit 42 for more detailed display while viewing the design 40 as displayed in FIG. 5 or FIG. 6.

The third plane 40L3 includes subcomponents that respectively comprise the LDO 422, LDO 422, VCO 424, and first and second buffers 426A and 426B that comprise the components of the circuit 42, said subcomponents being collectively referred to as third-level components below. Accordingly, the third plane 40L3 displays the DIFF 4222, the PASST 4224, the PDIV 4226, and the FILT 4228 that comprise the LDO 422; the INDB 4242, the DTUNE 4244, the VTUNE 4246, and the DIFF 4248 that comprise the VCO 424; the first IBUF 4262A and the first BUF 4264A that comprise the first buffer 426A, and the second IBUF 4262B and the second BUF 4264B that comprise the second buffer 426B.

In FIG. 7, in the third plane 40L3, the embodiment displays some of the interconnects 44 between the second-level components of the design 40, which are also displayed in the second plane 40L2. In addition, the embodiment displays interconnects between, to, and from the third-level components (such as interconnects 64, 66, and 68 shown in FIG. 6) in the third plane 40L3.

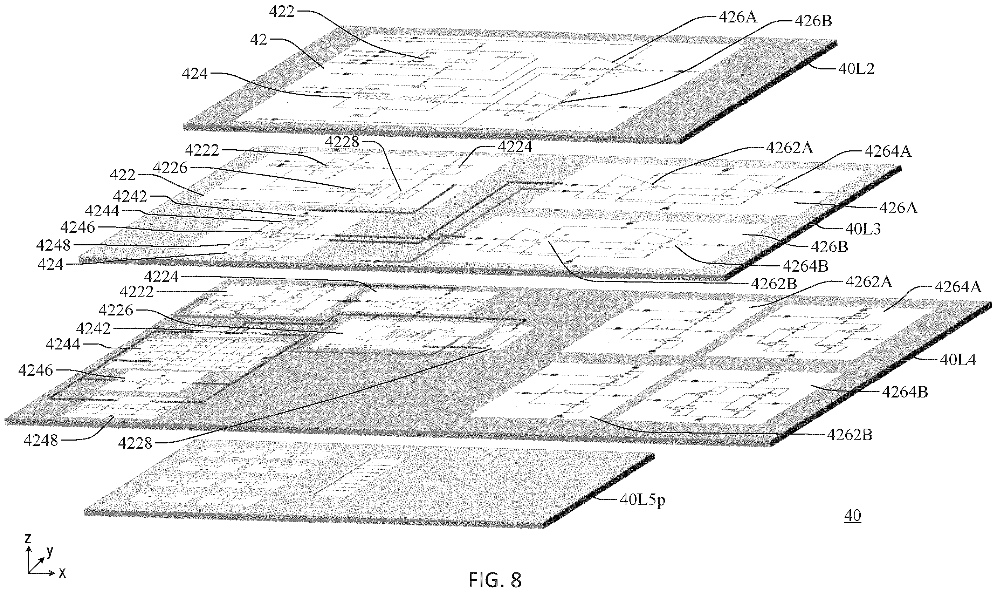

FIG. 8 illustrates another display of the hierarchical design 40 according to an embodiment. In FIG. 8, the second plane 40L2, the third plane 40L3, a fourth plane 40L4 corresponding to a fourth hierarchical level of the design 40, and a fifth plane 40L5p corresponding to a portion of a fifth hierarchical level of the design 40 are displayed. The second plane 40L2 is displayed as described for FIG. 5. The third plane 40L3 is displayed as described for FIG. 7.

In an embodiment, the display shown in FIG. 8 may be generated in response to a user selecting the circuit 42 for more detailed display while viewing the design 40 as displayed in FIG. 5, FIG. 6, or FIG. 7.

In FIG. 8, the embodiment displays subcomponents of the third-level components as components of the fourth plane 40L4 (hereinafter, fourth-level components) in a manner similar to how the embodiment displays the components of the second-level components in the third plane 40L3. Furthermore, the embodiment displays subcomponents of the some of the fourth-level components as components of the fifth level portion plane 40L5p in a manner similar to how the embodiment displays the components of the second-level components in the third plane 40L3. Accordingly, details of how the embodiment displays the components of the fourth plane 40L4 and fifth level portion 40L5p are omitted in the interest of brevity.

In FIG. 8, the interconnects within each of a plurality of levels of the hierarchy (i.e., intralevel interconnects), may be simultaneously displayed by the embodiment. Some embodiments may display the intralevel interconnects for all the displayed levels, or for selected levels according to user input, configuration options, or a combination thereof.

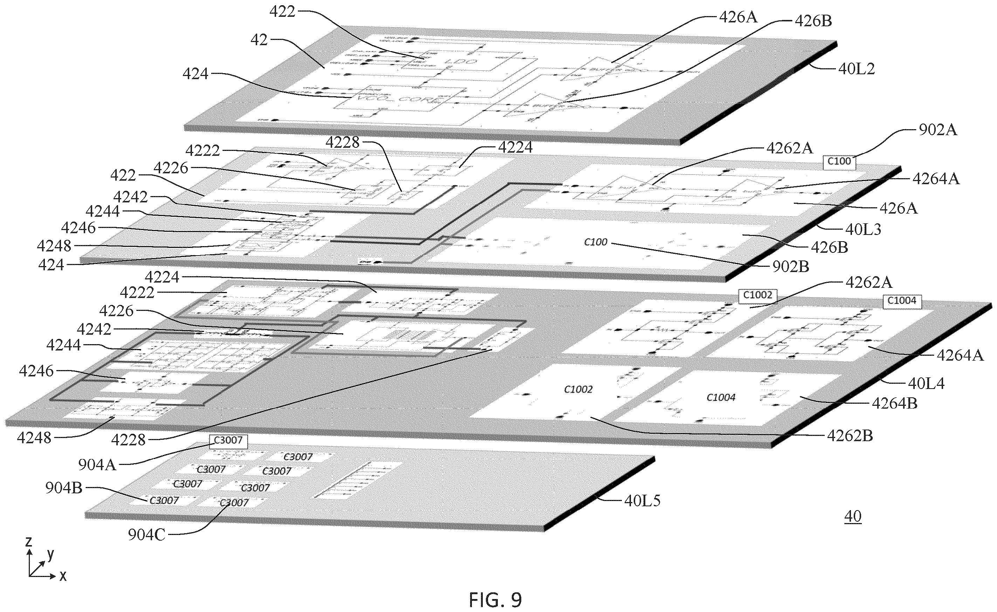

FIG. 9 illustrates another display of the hierarchical design 40 according to an embodiment, and includes the components described with respect to FIG. 8. Accordingly, description of features of FIG. 9 that are substantially similar to those shown in FIG. 8 are omitted in the interest of brevity.

The display in FIG. 9 differs from the display of FIG. 8 with respect to duplicated components in the design. In FIG. 8, duplicate components such as first buffer 426A and second buffer 426B are each displayed in detail, as shown in FIG. 8. In contrast, in FIG. 9, one instance of each set of duplicate component is shown in detail (here, first buffer 426A, first IBUF 42662A, first BUF 4264A, and fifth level component 904A), while the other instances of each set of duplicate components (here, second buffer 426B, second IBUF 4262B, second BUF 4264B, and fifth level components 904B and 904C) are indicated as being duplicates of the one instance shown in detail.

In FIG. 9, a label is associated with each set of duplicate components and is displayed in, on, or adjacent to each member of the set of duplicate components to indicate membership in the set. For example, first buffer 426A and second buffer 426B are each labeled with "C100" to indicate that they are respective duplicates, fifth level components 904A, 904B, and 904C are each labeled with "C3007" to indicate that they are respective duplicates, and so on.

In embodiments, the label associated with each duplicate component may correspond to a cell name in the design or in a library of cells.

In embodiments, the presentation of labels for instances of duplicate components that are presented in detail differs from the presentation of labels for instances of duplicate components that are not presented in detail. For example, in FIG. 9, the label for first buffer 426A that is presented in detail is displayed as an enclosed block extending in the Z-axis from an edge of the first buffer 426A, while the label for second buffer 426A that is not presented in detail is displayed embedded in the center of the second buffer 426B and in italics. However, embodiments are not limited thereto, and in other embodiments, distinguishing the labels of detailed versus non-detailed components may be done by altering one or more selected from the font, font size, font style, color, background color, shape, border color, background color, transparency, or any other visible attribute of the labels.

In FIG. 9, fourth level components that comprise the second buffer 426B (second IBUF 4262B and second BUF 4264B ) and that are therefore duplicates of the fourth level components that comprise the first buffer 426A (first IBUF 42662A and first BUF 4264A) are displayed in the fourth plane 40L4 even though details of second buffer 426B are not shown in the third plane 40L3, but embodiments are not limited thereto. In other embodiments, components that comprise a duplicate component that is not displayed in detail at a level of the hierarchy are not displayed at the next lower level of the hierarchy.

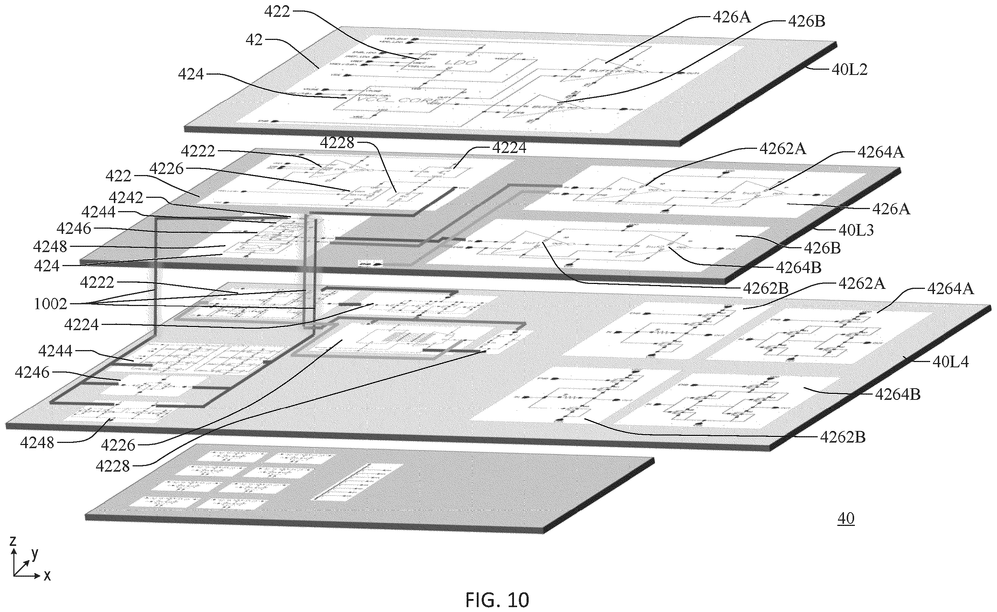

FIG. 10 illustrates another display of the hierarchical design 40 according to an embodiment, and includes the components described with respect to FIG. 8. Accordingly, description of features of FIG. 10 that are substantially similar to those shown in FIG. 8 are omitted in the interest of brevity.

The display in FIG. 10 differs from the display of FIG. 8 in that the in FIG. 10, the embodiment displays interconnects 1002 between components on two different levels of the hierarchy.

In particular, in the previous FIG. 8, the embodiments displays the INDB 4242 (in the VCO 424) on the third plane 40L3 and also on the fourth plane 40L4, and displays interconnects to and from the INDB 4242 on the third plane 40L3. In contrast, in FIG. 10, the embodiments displays the INDB 4242 (in the VCO 424) on the third plane 40L3 and does not display it on the fourth plane 40L4, and accordingly the interconnects between components if the fourth plane 40L4 are displayed as interlevel interconnects 1002.

As a result, in FIG. 10 all of the interconnects between the levels, as well as interconnects within each level (i.e., intralevel interconnects), may be simultaneously displayed by the embodiment. In embodiments, interconnects may be color-coded to distinguish between intralevel and interlevel interconnects.

In an embodiment, whether the design 40 is displayed as shown in FIG. 8 (with some components duplicated across levels) or is displayed as shown in FIG. 10 (with some components not duplicated across levels but instead shown as being connected using interlevel interconnects) may be determined according to configuration options, commands from the user, or both.

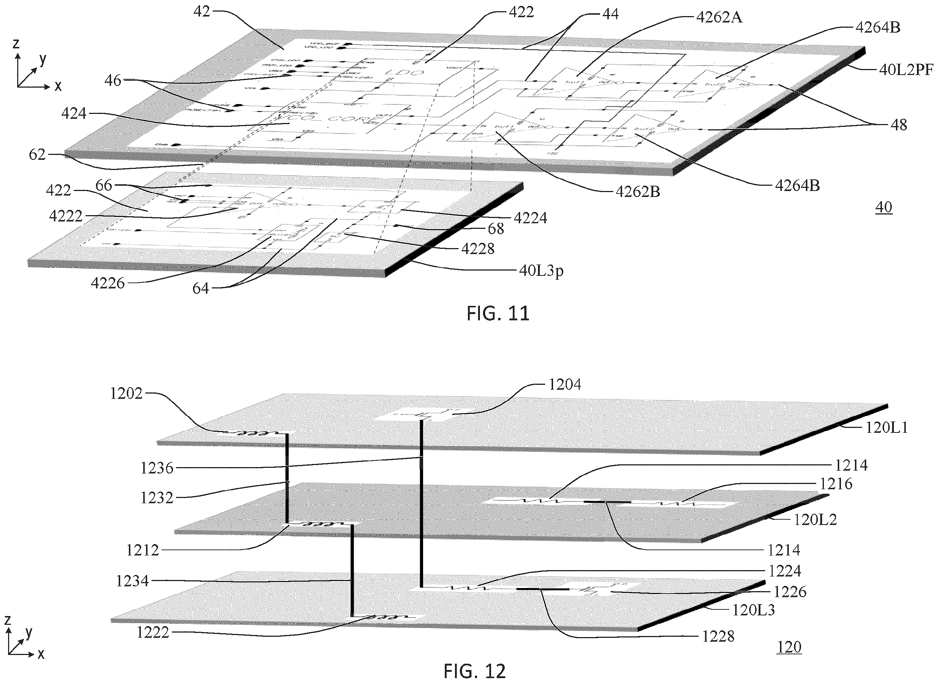

FIG. 11 illustrates a partially flattened display of the hierarchical design 40 of FIG. 4 such a may be produced by an embodiment. As in FIG. 6, in FIG. 11, the embodiments displays the third level portion plane 40L3p including the subcomponents of the LDO 422 displayed in the partially flattened second plane 40L2PF. Reference characters shown in FIG. 11 that are the same as reference characters in FIGS. 6 and 7 refer to the same components as in those figures.

Unlike in FIG. 6, in FIG. 11 the first and second buffer 426A and 426B shown in FIG. 6 have been flattened so that their subcomponents - first and second IBUFs 4262A and 4262B and first and second BUFs 4264A and 4264B - and the interconnects to, from, and between those components are shown in the partially flattened second plane 40L2PF.

FIG. 11 shows the first and second buffer 426A and 426B flattened by one level (that is, so that the subcomponents from the next level in the hierarchy are displayed) but embodiment are not limited thereto, and in embodiments a component may be flattened by more than one level or by all the levels in the design according to a user input, a configuration option, or a combination thereof.

FIG. 11 shows only some components of the second level L2 of the design 40 being flattened, but embodiments are not limited thereto and may flatten all of the components of a selected level according to a user input, a configuration option, or a combination thereof.

FIG. 11 shows components of the top displayed level of the hierarchy (here, second level L2 of the design 40 which was displayed (un-flattened) on second plane 40L2 of FIG. 6) being flattened, but embodiments are not limited thereto. For example, in an embodiment, components of the third level L2 of the design 40 could be flattened, either along with or instead of the flattening of the components shown in partially flattened second level 40L2PF.

FIG. 12 illustrates a display of a stacked multi-substrate design 120 according to an embodiment. The multi-substrate design 120 includes first, second, and third substrates which in FIG. 12 are displayed on a first, second, and third planes 120L1, 120L2, and 120L3, respectively. As an illustrative example, the first substrate may be a first semiconductor die, the second substrate may be an interposer, and the third substrate may be a second semiconductor die, but embodiments are not limited thereto.

The display of the first plane 120L1 includes a plurality of first substrate components including a first component 1202 and a second component 1204.

The display of the second plane 120L2 may include a plurality of second substrate components including a third component 1212, a fourth component 1214, and a fifth component 1216. The display of the second plane 120L2 may also include intrasubstrate interconnects such as second substrate interconnect 1218.

The display of the third plane 120L3 may include a plurality of third substrate components including a sixth component 1222, a seventh component 1224, and an eighth component 1226. The display of the third plane 120L3 may also include intrasubstrate interconnects such as third substrate interconnect 1228.

The display of the multi-substrate design 120 further includes intersubstrate interconnects including a first intersubstrate interconnect 1232 between the first substrate and the second substrate (displayed as a line between a location on the first plane 120L1 and a location on the second plane 120L2), a second intersubstrate interconnect 1234 between the second substrate and the third substrate (displayed as a line between locations on the second plane 120L2 and the third plane 120L3), and a third intersubstrate interconnect 1236 between the first substrate and the third substrate (displayed as a line between locations on the first plane 120L1 and the third plane 120L3). Because the display in FIG. 12 is a schematic display (as opposed to a layout display or other display that more directly corresponds to a physical implementation), an embodiment may not display a means by which the third intersubstrate interconnect 1236 passes through the second plane 120L2. In embodiments, whether such means are displayed may be controlled by a user selection, a configuration option, or combinations thereof.

FIG. 13 illustrates a display of a stacked multi-substrate design 130 according to an embodiment, wherein the stacked multi-substrate design includes a hierarchical design. The stacked multi-substrate design 130 corresponds to replacing the first plane 120L1 of the stacked multi-substrate design 120 of FIG. 12 with a new first plane group 130LG that includes the hierarchical design 40 of FIG. 4.

Reference characters common between FIG. 13 and FIGS. 7 and 12 correspond to the respective components described with respect to FIGS. 7 and 12, and repetition of their description is omitted in the interest of brevity.

In the display produced by the embodiment illustrated in FIG. 13, first and second hierarchy levels L2 and L3 of the hierarchical design 40 as displayed in second plane 40L2 and third plane 40L3 in FIG. 7 are displayed as first subplane 130L1 and second subplane 130L2, respectively, of the first plane group 130LG, the first plane group 130LG corresponding to elements of the design 130 to be implemented on a first substrate.

Furthermore, in addition to second intersubstrate interconnect 1234 between the second plane 120L2 and the third plane 120L3, fourth interlayer interconnects 1332 between the bottom-most displayed level of hierarchical design incorporated in the first plane group 130LG (here, second subplane 130L2) are also displayed by the embodiment.

FIG. 13 illustrates a display of a hierarchical design of a substrate such as shown in FIG. 7 in a display of a stacked multi-substrate design such as shown in FIG. 12, but embodiments are not limited thereto. In embodiments, a hierarchical design of any or all of the substrates in a multi-substrate designed may each be respectively displayed in accordance with any of FIGS. 6 through 11.

FIG. 14 illustrates a process 1400 for providing a user interface for hierarchical and/or stacked designs according to an embodiment.

At S1402, the process 1400 receives indications of what and how to display the design. The indications may be based on inputs from a user, which may be input via a 3D GUI. The indications may include a scope indicating which components of the design are selected to be displayed, an indication of which levels of the design are selected to be displayed, and various options, such as, for example, whether to flatten some or all components, the amount of flattening to be done for each or all of the flattened component, whether to display interlayer interconnects, and the like.

At S1404, the process 1400 produces one or more planes corresponding to the one or more levels that have been selected for display. The planes may be produced using information on the design obtained from a design database. Each levels may correspond to a respective level in a hierarchy of a hierarchical design, a respective substrate of a stacked design, or a combination thereof.

Each plane includes a representation of a component of the design from the corresponding level. The representation of each component may comprise a symbolic representation (such as a block having a label or a shape indication the type of the component) or the representation may comprise one or more representation of subcomponents of that component, wherein the subcomponents are components of a different (lower) level of the design.

Each plane may further include representations of interconnects between the components whose representations are included in the plane (i.e., intralayer interconnects). The representations of the intralayer interconnects may include lines, dots indicating junctions, indications of terminals, and other such indications of interconnects has as are known in the related arts.

At S1406, the process 1400 disposes the planes an axis of a three-dimensional space. Each plane is disposed at a different position along the axis. The axis is different than the axes that the planes extend on in the 3D space, and in embodiments, may be orthogonal to the axes that the planes extend on.

At S1408, the process 1400 simultaneously displays the planes via the 3D GUI. The planes may be displayed as a 2D projection of the 3D space or via a 3D display such as described above with respect to FIG. 1.

At S1410, the process 1400 determines whether to display a subcomponent relationship between a component on one plane and one or more components on another plane that are subcomponents of that component. The determination to display the subcomponent relationship may be made according to a configuration option which may be set by the user or by an administrator and which may be a global option, an option specific to a component of the design, an option specific to a layer of the design, or a combination thereof. In response to determining to display the subcomponent relationships, the process 1400 proceeds to S1412; otherwise, the process 1400 proceeds to S1414.

At S1412, the process 1400, simultaneously with displaying the planes, displays an indication of the subcomponent relationship via the 3D GUI. The indication of the subcomponent relationship may include lines between regions corresponding to the component and the subcomponents, color coding of the component and components, or other indications of a relationship such as may be known in the related arts.

At S1414, the process 1400 determines whether to display an interlayer interconnect between a component on one plane and one or more components on another plane that are connected to that component. The determination to display the interlayer interconnect may be made according to a configuration option which may be set by the user or by an administrator and which may be a global option, an option specific to a component of the design, an option specific to a layer of the design, or a combination thereof. In response to determining to display the interlayer interconnect, the process 1400 proceeds to S1416; otherwise, the process 1400 proceeds to S1418.

At S1416, the process 1400, simultaneously with displaying the planes, displays a representation of the interlayer interconnect. Representations of interlayer interconnects may include lines, dots indicating junctions, indications of terminals, and other such indications of interconnects has as are known in the related arts. The representations of the interlayer interconnects may be renderer differently than the intralayer interconnects described above, such as, for example, by having a different weight, a different color, a different level of transparency, being dashed, or combinations thereof.

At S1418, the process 1400 receives user input from a user via the 3D GUI. The user input may be received as described above with respect to FIG. 1.

At S1420, the process 1400 processes the user input. Processing the user input may include altering options for displaying the design, such as specifying a different scope, different levels, of different options than those previously received at S1402 or at a previous iteration of S1418; altering the design such as by causing commands to be sent to a design database; causing an analysis of all or a portion of the design to be formed and/or displayed, or combinations thereof. However, embodiments are not limited thereto.

After processing the user input, the process 1400 proceeds back to S1404. At S1404, the process 1400 may update the planes according to the changes specified by the user input, including by updating a plane to reflect the changes to that plane caused by explicit changes to another plane or to a level of the design corresponding to the other plane, by updating the plane according to changes in display options for the other plane, or combinations thereof.

For example, deletion of a component on one level may cause an update to not only the plane corresponding to that level but also an update to another plane that corresponded to a level that had previously included subcomponents of the deleted component. For another example, flattening the representation of a component of a first level may cause the subcomponents of that component to no longer be displayed on a plane that corresponds to a second level that includes those subcomponents.

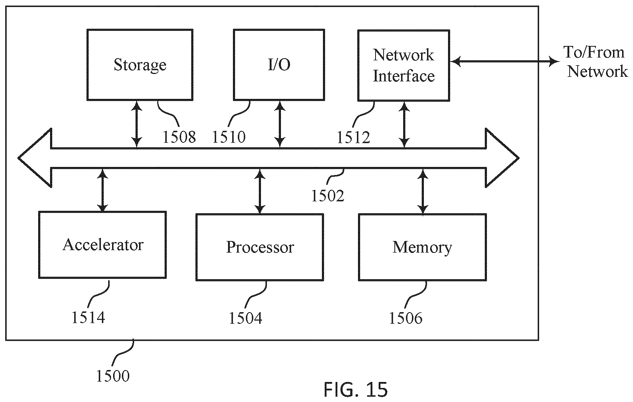

FIG. 15 illustrates an apparatus 1500 for providing a hierarchical 3D visualization UI according to an embodiment. The apparatus 1500 may be incorporated in or used to provide all or a portion of the EDA system 14 of FIG. 1.

The apparatus 1500 includes a processor 1504, a memory 1506, storage 1508, input/output (I/O) interfaces 1510, and a network interface 1512. In some embodiments, one or more of the components shown in FIG. 15 may be absent from the apparatus 1500. In some embodiments, the apparatus 1500 further includes an accelerator 1514 for accelerating graphics operations, such as a Graphics Processing Unit (GPU).

The memory 1506 and the storage 1508 may each include non-transient computer-readable media. The memory 1506 may include, for example, volatile memory such as Dynamic Random Access Memory (DRAM), nonvolatile memory such as Flash memory, or combinations thereof, but embodiments are not limited thereto. The storage 1508 may include, for example, optical disks, hard disk drives, solid-state drives, or combinations thereof, but embodiments are not limited thereto.

Processor 1504 may be configured to provide the hierarchical 3D visualization UI described herein. In embodiments, the processes for providing the hierarchical 3D visualization UI are performed by the processor 1504 executing computer programming instructions stored in the memory 1506, the storage 1508, or both; by the accelerator 1514 executing computer programming instructions stored in the memory 1506, the storage 1508, or both; or by a combination thereof.

In embodiments, a user of the apparatus 1500 may view a display as described herein and may provide input and control as described herein through the I/O interface 1510 or through a device connected to the apparatus 1500 through the network interface 1512.

In embodiments, the design database 12 of FIG. 1 may be stored in the memory 1506, the storage 1508, a device accessed through the network interface 1512, a device accessed through the I/O interface 1510, or combinations thereof.

As described above, embodiments display a schematic in a three dimensional fashion in order to represent hierarchy, thereby allowing designers to see all levels of details within a single window including all possible hierarchical levels and all interconnects, or to see selected hierarchical levels and selected interconnects as needed. By thereby making it easier for designers to comprehend the design and the impact of any changes to the design, the quality and time-to-market of the design may be improved.

Aspects of the present disclosure have been described in conjunction with the specific embodiments thereof that are proposed as examples. Numerous alternatives, modifications, and variations to the embodiments as set forth herein may be made without departing from the scope of the claims set forth below. Accordingly, embodiments as set forth herein are intended to be illustrative and not limiting.

In summary, a design is schematically displayed using a three-dimensional (3D) graphical user interface (GUI) by displaying, via the 3D GUI, a first plane extending along a first axis and a second axis different from the first axis, including displaying symbols corresponding to a set of first-level components of a first level of the design disposed on the first plane; and a second plane extending along the first axis and second axis, including displaying symbols corresponding to a first set of second-level components of a second level of the design disposed on the second plane. The two planes are displayed simultaneously, and respectively disposed at first and second positions along a third axis different from the first and second axes. Each level of the design may correspond to a respective level of a hierarchy of the design, a respective substrate the design will be implemented on, or a combination thereof. Herein, the following embodiments are explicitly disclosed.

### Embodiment 1:

A method for schematically displaying a design using a three-dimensional (3D) graphical user interface (GUI) of a computer system, the method comprising:
displaying, via the 3D GUI, the design by:
   displaying a first plane extending along a first axis and a second axis different from the first axis, including displaying a set of first-level components of a first level of the design disposed on the first plane; and
   displaying a second plane extending along the first axis and second axis, including displaying a first set of second-level components of a second level of the design disposed on the second plane,
wherein the first plane and the second plane are displayed simultaneously,
wherein the first plane and the second plane are respectively disposed at a first position and a second position different from the first position along a third axis different from the first axis and the second axis, and
wherein each of the set of first-level components and each of the first set of second-level components are displayed using a respective electronic schematic symbol.

### Embodiment 2:

The method of embodiment 1,
wherein the design is a hierarchical design, and
wherein a first second-level component of the first set of second-level components is a subcomponent of a first first-level component of the set of first-level components.

### Embodiment 3:

The method of embodiment 2, further comprising:
displaying, via the 3D GUI, and indication that the first second-level component is a subcomponent of the first first-level component. For example, the displaying via the 3D GUI may display an indication that the first second-level component is a subcomponent of the first-level component.

### Embodiment 4:

The method of embodiment 2 or 3, wherein displaying the first plane further comprises:
displaying on the first plane a second first-level component of the set of first-level components by displaying on the first plane a second set of second second-level components corresponding to subcomponents of the second first-level component.

### Embodiment 5:

The method of one of embodiments 2 to 4, further comprising:
displaying, via the 3D GUI, the design by displaying a third plane extending along the first axis and the second axis, including displaying a set of third-level components of a third level of the design disposed on the third plane,
wherein the set of first level-components and the first set of second-level components correspond to components to be implemented on a first substrate, and
wherein the set of third level-components corresponds to components to be implemented on a second substrate stacked with the first substrate.

### Embodiment 6:

The method of one of embodiments 1 to 5, further comprising displaying interconnects between the set of first-level components on the first plane, displaying interconnects between the first set of second-level components on the second plane, or both.

### Embodiment 7:

The method of one of embodiments 1 to 6, further comprising displaying an interconnect between a component disposed on the first plane and a component disposed on the second plane.

### Embodiment 8:

The method of one of embodiments 1 to 7, further comprising:
receiving, via the 3D GUI, a user input; and
altering the displaying of the design in response to the user input.

### Embodiment 9:

The method of one of embodiments 1 to 8, further comprising:
receiving, via the 3D GUI, a user input corresponding to a change in the design; and
causing the design to be altered in response to the user input.

### Embodiment 10:

The method of embodiment 9, wherein the change in the design corresponds to an addition, deletion, or alteration of one or more components displayed on one of the first and second planes, and further comprising:
updating the displaying of both the first plane and the second plane in response to the change in the design.

### Embodiment 11:

The method of one of embodiments 1 to 10, further comprising:
receiving, via the 3D GUI, a user input corresponding to an analysis of some or all the design; and
causing the analysis to be performed, a result of the analysis to be displayed, or both.

### Embodiment 12:

The method of one of embodiments 1 to 11,
wherein the set of first-level components corresponds to components to be implemented on a first substrate, and
wherein the first set of second-level components corresponds to components to be implemented on a second substrate stacked with the first substrate.

### Embodiment 13:

The method of one of embodiments 1 to 12, further comprising:
producing a 3D model comprising the components of a first level on the first plane and the components of a first level on the second plane;
producing a two-dimensional (2D) projection of the 3D model; and
displaying the design by displaying the 2D projection.

### Embodiment 14:

The method of one of embodiments 1 to 13, further comprising:
producing a 3D model comprising the components of a first level on the first plane and the components of a first level on the second plane; and
displaying the design by displaying the 3D model on a stereoscopic display, a computer-generated holography device, or a volumetric display device.

### Embodiment 15:

A system for schematically displaying a design using a three-dimensional (3D) graphical user interface (GUI), the system comprising:
a processor,
wherein the system is configured to perform steps comprising:
   displaying, via the 3D GUI, the design by:
      displaying a first plane extending along a first axis and a second axis different from the first axis, including displaying a set of first-level components of a first level of the design disposed on the first plane; and
      displaying a second plane extending along the first axis and second axis, including displaying a first set of second-level components of a second level of the design disposed on the second plane,
   wherein the first plane and the second plane are displayed simultaneously,
   wherein the first plane and the second plane are respectively disposed at a first position and a second position different from the first axis along a third axis different from the first axis and the second axis, and
   wherein each of the set of first-level components and each of the first set of second-level components are displayed using a respective electronic schematic symbol.

In some illustrative examples of embodiment 15, the system may be configured to perform the method of one of embodiments 1 to 14.

### Embodiment 16:

A non-transitive computer-readable media comprising computer programming instructions that when executed by one or more processors of a system including a three-dimensional (3D) graphical user interface (GUI) cause the system to schematically display a design by performing steps comprising:
displaying, via the 3D GUI, the design by:
   displaying a first plane extending along a first axis and a second axis different from the first axis, including displaying a set of first-level components of a first level of the design disposed on the first plane; and
   displaying a second plane extending along the first axis and second axis, including displaying a first set of second-level components of a second level of the design disposed on the second plane,
wherein the first plane and the second plane are displayed simultaneously,
wherein the first plane and the second plane are respectively disposed at a first position and a second position different from the first axis along a third axis different from the first axis and the second axis, and
wherein each of the set of first-level components and each of the first set of second-level components are displayed using a respective electronic schematic symbol.

In some illustrative examples of embodiment 16, the non-transitive computer-readable media may be configured to perform the method of one of embodiments 1 to 14.

### Embodiment 17:

The system of embodiment 15, further comprising the non-transitive computer-readable media of embodiment 16, preferably configured for performing the method of one of embodiments 1 to 14.

## Claims

1. A method for schematically displaying a design using a three-dimensional (3D) graphical user interface (GUI) of a computer system, the method comprising:
displaying, via the 3D GUI, the design by:
displaying a first plane extending along a first axis and a second axis different from the first axis, including displaying a set of first-level components of a first level of the design disposed on the first plane; and
displaying a second plane extending along the first axis and second axis, including displaying a first set of second-level components of a second level of the design disposed on the second plane,
wherein the first plane and the second plane are displayed simultaneously,
wherein the first plane and the second plane are respectively disposed at a first position and a second position different from the first position along a third axis different from the first axis and the second axis, and
wherein each of the set of first-level components and each of the first set of second-level components are displayed using a respective electronic schematic symbol.

2. The method of claim 1,
wherein the design is a hierarchical design, and
wherein a first second-level component of the first set of second-level components is a subcomponent of a first first-level component of the set of first-level components.

3. The method of claim 2, further comprising:
displaying, via the 3D GUI, an indication that the first second-level component is a subcomponent of the first first-level component.

4. The method of claim 2 or 3, wherein displaying the first plane further comprises:
displaying on the first plane a second first-level component of the set of first-level components by displaying on the first plane a second set of second second-level components corresponding to subcomponents of the second first-level component.

5. The method of one of claims 2 to 4, further comprising:
displaying, via the 3D GUI, the design by displaying a third plane extending along the first axis and the second axis, including displaying a set of third-level components of a third level of the design disposed on the third plane,
wherein the set of first level-components and the first set of second-level components correspond to components to be implemented on a first substrate, and
wherein the set of third level-components corresponds to components to be implemented on a second substrate stacked with the first substrate.

6. The method of one of claims 1 to 5, further comprising:
displaying interconnects between the set of first-level components on the first plane, displaying interconnects between the first set of second-level components on the second plane, or both; and/or
displaying an interconnect between a component disposed on the first plane and a component disposed on the second plane.

7. The method of one of claims 1 to 6, further comprising:
receiving, via the 3D GUI, a user input; and
altering the displaying of the design in response to the user input.

8. The method of one of claims 1 to 7, further comprising:
receiving, via the 3D GUI, a user input corresponding to a change in the design; and
causing the design to be altered in response to the user input.

9. The method of claim 8, wherein the change in the design corresponds to an addition, deletion, or alteration of one or more components displayed on one of the first and second planes, and further comprising:
updating the displaying of both the first plane and the second plane in response to the change in the design.

10. The method of one of claims 1 to 9, further comprising:
receiving, via the 3D GUI, a user input corresponding to an analysis of some or all the design; and
causing the analysis to be performed, a result of the analysis to be displayed, or both.

11. The method of one of claims 1 to 10,
wherein the set of first-level components corresponds to components to be implemented on a first substrate, and
wherein the first set of second-level components corresponds to components to be implemented on a second substrate stacked with the first substrate.

12. The method of one of claims 1 to 11, further comprising:
producing a 3D model comprising the components of a first level on the first plane and the components of a first level on the second plane;
producing a two-dimensional (2D) projection of the 3D model; and
displaying the design by displaying the 2D projection.

13. The method of one of claims 1 to 12, further comprising:
producing a 3D model comprising the components of a first level on the first plane and the components of a first level on the second plane; and
displaying the design by displaying the 3D model on a stereoscopic display, a computer-generated holography device, or a volumetric display device.

14. A system for schematically displaying a design using a three-dimensional (3D) graphical user interface (GUI), the system comprising:
a processor,
wherein the system is configured to perform steps comprising:
displaying, via the 3D GUI, the design by:
displaying a first plane extending along a first axis and a second axis different from the first axis, including displaying a set of first-level components of a first level of the design disposed on the first plane; and
displaying a second plane extending along the first axis and second axis, including displaying a first set of second-level components of a second level of the design disposed on the second plane,
wherein the first plane and the second plane are displayed simultaneously,
wherein the first plane and the second plane are respectively disposed at a first position and a second position different from the first axis along a third axis different from the first axis and the second axis, and
wherein each of the set of first-level components and each of the first set of second-level components are displayed using a respective electronic schematic symbol.

15. A non-transitive computer-readable media comprising computer programming instructions that when executed by one or more processors of a system including a three-dimensional (3D) graphical user interface (GUI) cause the system to schematically display a design by performing the method of one of claims 1 to 13.
